# EUROPEAN PATENT SPECIFICATION

(11) **EP 2 940 834 B1**
(45) Date of publication and mention of the grant of the patent: **21.08.2019**
(21) Application number: 15162457.4
(22) Date of filing: 02.04.2015
(51) Int. Cl.: H02K 3/32, H02K 3/28, H02K 3/34, H02K 3/18

(54) **MOTOR**
MOTOR
MOTEUR

(30) Priority: 16.04.2014 JP 2014084093
(43) Date of publication of application: 04.11.2015
(73) Proprietor: Nidec Corporation, Kyoto 601-8205 (JP)
(72) Inventor: Nakahara, Yasuaki, Kyoto, Kyoto 601-8205 (JP); Haga, Hidehiro, Kyoto, Kyoto 601-8205 (JP); Sato, Ryusuke, Kyoto, Kyoto 601-8205 (JP)
(74) Representative: Zimmermann, Tankred Klaus

(56) References cited:
- EP-A1- 1 713 158
- WO-A1-2007/111073
- WO-A2-02/052693
- WO-A2-2008/027535
- JP-A- 2007 236 181

## Description

### [Technical Field]

The present invention relates to a motor.

### [Background Art]

In the past, many in-vehicle motors have been mounted on transportation equipment such as an automobile. For a reduction in environmental load, a space saving and a reduction in weight are required for an in-vehicle component. For this reason, in the field of the in-vehicle motor, a reduction in the size of the motor has progressed. In order to realize a reduction in the size of a motor, it is necessary to compactly wind a conducting wire around an insulator of a stator. Further, also in motors which are used for other uses, due to limitation of a mounting space, or the like, there is a case where it is necessary to compactly wind a conducting wire.

In general, in a manufacturing process of a three-phase synchronous motor, three conducting wires corresponding to the respective phases of a three-phase current are wound by using a winding machine. Each conducting wire forms a plurality of winding wire portions around teeth. Further, the plurality of winding wire portions are connected by connecting wires. The connecting wires are disposed so as to extend in a circumferential direction along the radially outer surface of an insulator. Further, an end portion of each conducting wire is led out from the winding wire portion and connected to a connection destination such as a bus bar.

Conducting wire winding methods in motors of the related art are described in the specifications of, for example, Japanese Patent Nos. 4704177 and 4860339.

WO 2008/027535 A2 discloses an electric motor with a magnetic wiring guidance with guide walls provided to the outer periphery of insulators to guide connections between stator cores. A magnetic wiring may be wrapped around the exterior surfaces of the guide walls as it passes from one coil to the next associated coil.

EP 1713158 A1 discloses a stator of a motor having a stator core having a plurality of teeth and windings wound around teeth. The insulator is provided with lead-out guide portions that enable lead-out wires to be drawn out from tooth winding portions in a state of being close to the tooth winding portions.

### [Disclosure of the Invention]

An object of the present invention is to provide a technique capable of reducing the radial dimension of a motor by devising a method of winding a conducting wire.

This object is achieved by a motor of claim 1.

The invention is based on the inventors' findings that in a case where a bus bar or the like which is a connection destination of a conducting wire is located on the upper side in an axial direction of a stator, it is necessary for an end portion of each conducting wire to be led out axially upward from a winding wire portion. If so, there is a case where a connecting wire of the conducting wire which is wound second or later and a lead-out wire of the previously wound conducting wire interfere with each other. In this case, the connecting wire of the conducting wire which is wound second or later and the lead-out wire of the previously wound conducting wire are disposed so as to radially overlap on the outside in the radial direction of a wall portion. As a result, the conducting wire partially protrudes radially outward, and thus there is a problem in which the radial dimension of the entire motor increases.

A motor according to an exemplary first invention of this application as disclosed in claim 1 has a stator, and a rotor which is rotatably supported on the inside in a radial direction of the stator. The stator has a stator core which is a magnetic body, an insulator mounted on the stator core, and first, second, and third conducting wires which are wound around the insulator and through which electric currents of the respective phases of a three-phase alternating current flow. The stator core has a core back which is seamlessly connected in an annular shape around a central axis extending up and down, and a plurality of teeth extending radially inward from the core back. The insulator has a teeth insulating portion which is interposed between each of the teeth and the conducting wire, and a wall portion extending in a circumferential direction further on the outside in the radial direction and on the upper side than the teeth insulating portion. Each of the first, second, and third conducting wires includes a plurality of winding wire portions which are wound around the teeth insulating portion, one or more connecting wire portions performing relay between the plurality of winding wire portions, and a lead-out wire portion extending axially upward from the winding wire portion. The one or more connecting wire portions of the first conducting wire have only outer connecting wire portions passing through the outside in the radial direction of the wall portion. The one or more connecting wire portions of the second and third conducting wires have outer connecting wire portions passing through the outside in the radial direction of the wall portion, and inner connecting wire portions passing through the inside in the radial direction of the wall portion. The inner connecting wire portion of the second conducting wire passes through the inside in the radial direction of the lead-out wire portion of the first conducting wire, and the inner connecting wire portion of the third conducting wire passes through the inside in the radial direction of the lead-out wire portion of the first conducting wire and the lead-out wire portion of the second conducting wire.

A motor according to an exemplary second invention of this application has a stator, and a rotor which is rotatably supported on the inside in a radial direction of the stator. The stator has a stator core which is a magnetic body, an insulator mounted on the stator core, and first, second, and third conducting wires which are wound around the insulator and through which electric currents of the respective phases of a three-phase alternating current flow. The stator core has a core back which is seamlessly connected in an annular shape around a central axis extending up and down, and a plurality of teeth extending radially inward from the core back. The insulator has a teeth insulating portion which is interposed between each of the teeth and the conducting wire, and a wall portion extending in a circumferential direction further on the outside in the radial direction and on the upper side than the teeth insulating portion. Each of the first, second, and third conducting wires includes a plurality of winding wire portions which are wound around the teeth insulating portion, one or more connecting wire portions performing relay between the plurality of winding wire portions, and a lead-out wire portion extending axially upward from the winding wire portion. The one or more connecting wire portions of at least one conducting wire have outer connecting wire portions passing through the outside in the radial direction of the wall portion, and inner connecting wire portions passing through the inside in the radial direction of the wall portion. The outer connecting wire portion and the inner connecting wire portion are continuous, and the at least one conducting wire crosses the wall portion at a boundary between the outer connecting wire portion and the inner connecting wire portion.

### [Advantage of the Invention]

According to the exemplary first invention of this application, the interference of the connecting wire portion with the lead-out wire portions of other conducting wires can be avoided. For this reason, the connecting wire portion and the lead-out wire portion do not radially overlap further on the outside in the radial direction than the wall portion. In this way, it is possible to reduce the radial dimension of the motor.

According to the exemplary second invention of this application, at least one conducting wire has the outer connecting wire portion and the inner connecting wire portion. In this way, it is possible to dispose the connecting wire portion while avoiding interference with the lead-out wire portions of other conducting wires. As a result, it is possible to reduce the radial dimension of the motor. Further, since the outer connecting wire portion and the inner connecting wire portion are continuous, radially inward protrusion of the inner connecting wire portion can be suppressed.

### [Brief Description of the Drawings]

Fig. 1 is a diagram when a motor according to a first embodiment is viewed from the upper side in an axial direction.
Fig. 2 is a vertical cross-sectional view of a motor according to a second embodiment.
Fig. 3 is a diagram schematically showing a method of winding three conducting wires.
Fig. 4 is a diagram schematically showing the method of winding three conducting wires.
Fig. 5 is a diagram when a stator is viewed from the position of an arrow P in Fig. 4.
Fig. 6 is a diagram when a wall portion of an insulator is viewed from the position of an arrow A in Fig. 4.
Fig. 7 is a diagram when a wall portion of an insulator is viewed from the position of an arrow B in Fig. 4.
Fig. 8 is a diagram when a wall portion of an insulator is viewed from the position of an arrow C in Fig. 4.
Fig. 9 is a diagram when a motor according to a modified example is viewed from the upper side in the axial direction.

### [Embodiments for Carrying Out the Invention]

Hereinafter, exemplary embodiments of the present invention will be described with reference to the drawings. In addition, in this application, a direction parallel to a central axis of a motor is referred to as an "axial direction", a direction orthogonal to the central axis of the motor is referred to as a "radial direction", and a direction along an arc centered on the central axis of the motor is referred to as a "circumferential direction". Further, in this application, the shape or the positional relationship of each portion will be described with the axial direction set to be a vertical direction and the side of a lead-out wire portion with respect to a winding wire portion set to be the top. However, the definition of the vertical direction is not intended to limit a direction at the time of the manufacturing and the time of the use of a motor according to the present invention.

Further, in this application, a "direction parallel to" also includes a direction substantially parallel to. Further, in this application, a "direction orthogonal to" also includes a direction substantially orthogonal to.

### <1. First Embodiment

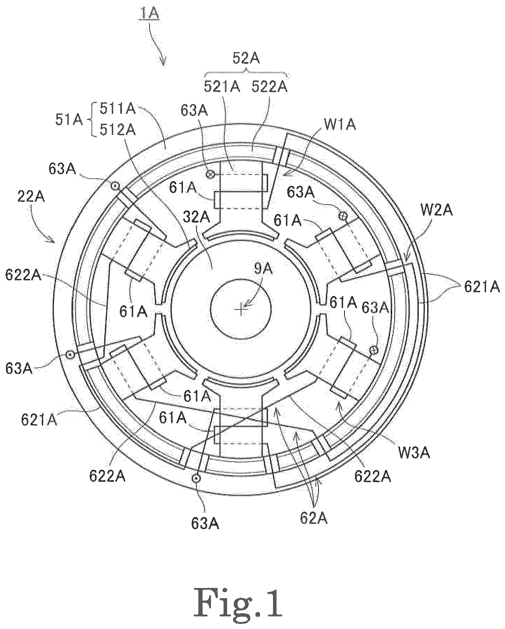

Fig. 1 is a diagram when a motor 1A according to a first embodiment of the present invention is viewed from the upper side in the axial direction. As shown in Fig. 1, the motor 1A has a stator 22A and a rotor 32A. The rotor 32A is rotatably supported on the inside in the radial direction of the stator 22A.

The stator 22A has a stator core 51A which is a magnetic body, and an insulator 52A mounted on the stator core 51A. The stator core 51A has a core back 511A and a plurality of teeth 512A. The core back 511A is seamlessly connected in an annular shape around a central axis 9A. The plurality of teeth 512A extend radially inward from the core back 511A.

The insulator 52A has a teeth insulating portion 521A and a wall portion 522A. The teeth insulating portion 521A is interposed between each of the teeth 512A and a winding wire portion 61A (described later). The wall portion 522A extends in the circumferential direction further on the outside in the radial direction and the on upper side than the teeth insulating portion 521A.

A first conducting wire W1A, a second conducting wire W2A, and a third conducting wire W3A are wound around the insulator 52A. Electric currents of the respective phases of a three-phase alternating current respectively flow through the first conducting wire W1A, the second conducting wire W2A, and the third conducting wire W3A. Each of the conducting wires W1A, W2A, and W3A includes two winding wire portions 61A, a single connecting wire portion 62A, and two lead-out wire portions 63A. The winding wire portion 61A is wound around the teeth insulating portion 521A of the insulator 52A. The connecting wire portion 62A performs relay between the plurality of winding wire portions 61A. The lead-out wire portion 63A extends axially upward from the winding wire portion 61A of a winding start or a winding end.

As shown in Fig. 1, the connecting wire portion 62A of the first conducting wire W1A passes through further on the outside in the radial direction than the wall portion 522A of the insulator 52A. That is, the connecting wire portion 62A of the first conducting wire W1A has only an outer connecting wire portion 621A passing through the outside in the radial direction of the wall portion 522A. On the other hand, each of the connecting wire portions 62A of the second conducting wire W2A and the third conducting wire W3A has an outer connecting wire portion 621A passing through the outside in the radial direction of the wall portion 522A, and an inner connecting wire portion 622A passing through the inside in the radial direction of the wall portion 522A.

The inner connecting wire portion 622A of the second conducting wire W2A passes through the inside in the radial direction of the lead-out wire portion 63A of a winding end of the first conducting wire W1A. For this reason, it is possible to avoid the lead-out wire portion 63A of the first conducting wire W1A and the connecting wire portion 62A of the second conducting wire W2A interfering with each other further on the outside in the radial direction than the wall portion 522A. That is, the lead-out wire portion 63A of the first conducting wire W1A and the connecting wire portion 62A of the second conducting wire W2A do not radially overlap further on the outside in the radial direction than the wall portion 522A.

The third conducting wire W3A has two inner connecting wire portions 622A. The inner connecting wire portion 622A on one side of the third conducting wire W3A passes through the inside in the radial direction of the lead-out wire portion 63A of a winding end of the first conducting wire W1A. The inner connecting wire portion 622A on the other side of the third conducting wire W3A passes through the inside in the radial direction of the lead-out wire portion 63A of a winding end of the second conducting wire W2A. For this reason, it is possible to avoid the connecting wire portion 62A of the third conducting wire W3A interfering with the lead-out wire portion 63A of the first conducting wire W1A and the connecting wire portion 63A of the second conducting wire W2A further on the outside in the radial direction than the wall portion 522A. That is, the lead-out wire portion 63A of the first conducting wire W1A and the lead-out wire portion 63A of the second conducting wire W2A do not radially overlap with the lead-out wire portion 62A of the third conducting wire W3A further on the outside in the radial direction than the wall portion 522A.

In this manner, in the motor 1A, the connecting wire portions 62A of the second conducting wire W2A and the third conducting wire W3A are disposed while avoiding interference with the lead-out wire portion 63A of the other conducting wire. In this way, radial overlap of the conducting wires further on the outside in the radial direction of the wall portion 522A is avoided. As a result, it is possible to reduce the radial dimension of the motor 1A.

Further, the outer connecting wire portion 621A and the inner connecting wire portion 622A of the second conducting wire W2A are continuous with each other. The second conducting wire W2A crosses the wall portion 522A at the boundary between the inner connecting wire portion 622A and the outer connecting wire portion 621A. Further, the pair of outer connecting wire portion 621A and inner connecting wire portion 622A of the third conducting wire W3A is continuous with each other. The third conducting wire W3A crosses the wall portion 522A at the boundary between the inner connecting wire portion 622A and the outer connecting wire portion 621A. In this manner, if the outer connecting wire portion 621A and the inner connecting wire portion 622A are provided continuously, it is possible to suppress the radially inward protrusion of the inner connecting wire portion 622A. This is because the radial position of the outer connecting wire portion 621A is fixed by the wall portion 522A and therefore, the radially inward movement of the inner connecting wire portion 622A which is continuous with the outer connecting wire portion 621A is also restricted. Therefore, the inner connecting wire portion 622A can be prevented from coming into contact with the rotor 32A.

### <2. Second Embodiment>

### <2-1. Overall Configuration of Motor>

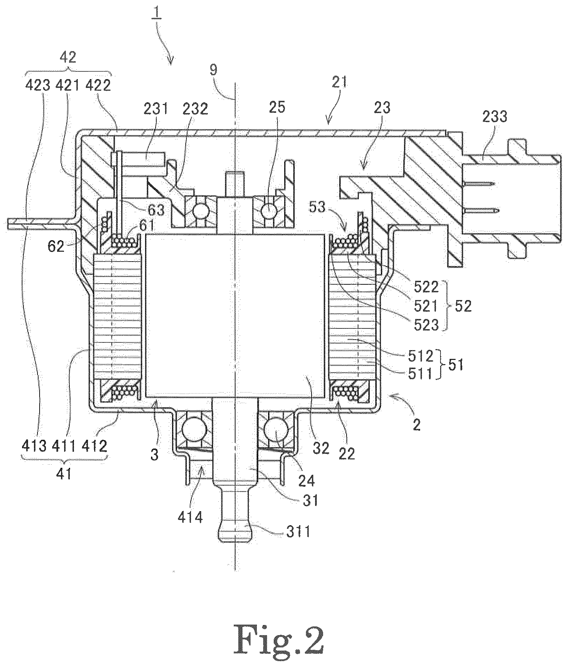

Subsequently, a second embodiment of the present invention will be described. Fig. 2 is a vertical cross-sectional view of a motor 1 according to the second embodiment. The motor 1 according to this embodiment is mounted on, for example, an automobile and used in order to generate the driving force of a power steering. However, the motor according to the present invention may be used for uses other than the power steering. For example, the motor according to the present invention may be used as a drive source of the other site of an automobile, for example, a fan for engine cooling or an oil pump. Further, the motor according to the present invention may also be mounted on home electric appliances, office automation (OA) equipment, medical equipment, or the like, thereby generating various driving forces.

The motor 1 is an inner rotor type motor in which a rotor 32 is disposed radially inside a stator 22. As shown in Fig. 2, the motor 1 has a stationary section 2 and a rotating section 3. The stationary section 2 is fixed to a frame body of equipment which is a drive target. The rotating section 3 is supported so as to be able to rotate with respect to the stationary section 2.

The stationary section 2 in this embodiment has a housing 21, the stator 22, a bus bar unit 23, a lower bearing section 24, and an upper bearing section 25.

The housing 21 has a first housing member 41 and a second housing member 42. The first housing member 41 has a first tubular portion 411, a bottom plate portion 412, and a first flange portion 413. The first tubular portion 411 axially extends in a substantially cylindrical shape radially outside the stator 22. The bottom plate portion 412 extends substantially perpendicular to a central axis 9 on the lower side of the stator 22. An opening 414 for disposing a shaft 31 (described later) is provided at the center of the bottom plate portion 412. The first flange portion 413 extends radially outward from an upper end portion of the first tubular portion 411.

The second housing member 42 has a second tubular portion 421, a top plate portion 422, and a second flange portion 423. The second tubular portion 421 axially extends in a substantially cylindrical shape radially outside the bus bar unit 23. The top plate portion 422 extends substantially perpendicular to the central axis 9 on the upper side of the bus bar unit 23. The second flange portion 423 extends radially outward from a lower end portion of the second tubular portion 421.

The first housing member 41 and the second housing member 42 are configured by metal such as aluminum or stainless steel, for example. The first flange portion 413 of the first housing member 41 and the second flange portion 423 of the second housing member 42 are fixed to each other by screws (not shown). The stator 22, the bus bar unit 23, and the rotor 32 (described later) are accommodated in an internal space of the housing 21 surrounded by the first tubular portion 411, the second tubular portion 421, the bottom plate portion 412, and the top plate portion 422.

The stator 22 has a stator core 51, an insulator 52 mounted on the stator core 51, and a conducting wire 53 wound around the insulator 52. A laminated steel plate which is a magnetic body is used for the stator core 51. The stator core 51 has a core back 511 having an annular shape, and a plurality of teeth 512 extending radially inward from the core back 511. The core back 511 is disposed substantially coaxially with the central axis 9. Further, the core back 511 is seamlessly connected around the central axis 9. The outer circumferential surface of the core back 511 is fixed to the inner circumferential surface of the first tubular portion 411 of the housing 21. The plurality of teeth 512 are arranged at substantially regular intervals in the circumferential direction.

The insulator 52 is made of resin which is an insulator. The insulator 52 has a teeth insulating portion 521, a wall portion 522, and a leading end convex portion 523. The teeth insulating portion 521 covers the upper surface, the lower surface, and both end surfaces in the circumferential direction of each of the teeth 512. The wall portion 522 and the leading end convex portion 523 are respectively located radially outside and radially inside a winding wire portion 61 (described later). On the upper side of the stator core 51, the wall portion 522 extends in the circumferential direction further on the outside in the radial direction and on the upper side than the teeth insulating portion 521.

In this embodiment, three conducting wires 53 are wound around the insulator 52. Each of the conducting wires 53 has a plurality of winding wire portions 61 wound around the teeth insulating portions 521. That is, in this embodiment, the winding wire portion 61 of each of the conducting wires 53 is wound around the teeth 512 with the teeth insulating portion 521 interposed therebetween. The plurality of winding wire portions 61 are arranged at substantially regular intervals in the circumferential direction. The teeth insulating portion 521 is interposed between each of the teeth 512 and the winding wire portion 61, thereby preventing the teeth 512 and the winding wire portion 61 from electrically short-circuiting.

The bus bar unit 23 has a plurality of bus bars 231 made of metal such as copper which is an electric conductor, and a bus bar holder 232 made of resin, which holds the plurality of bus bars 231. Lead-out wire portions 63 and 64 (described later) of each of the conducting wires 53 are connected to the plurality of bus bars 231. Further, the bus bar unit 23 has a connector portion 233 protruding radially outward from an opening provided in a portion of the second tubular portion 421 of the housing 21. At the time of use of the motor 1, a conducting wire extending from an external power supply is connected to a terminal of the connector portion 233. In this way, the external power supply and the three conducting wires 53 are electrically connected through the bus bars 231.

The lower bearing section 24 is disposed between the bottom plate portion 412 of the housing 21 and the shaft 31. The upper bearing section 25 is disposed between the bus bar holder 232 and the shaft 31. A ball bearing in which an outer ring and an inner ring relatively rotate with balls interposed therebetween is used for each of the lower bearing section 24 and the upper bearing section 25 in this embodiment. In this way, the shaft 31 is rotatably supported with respect to the stationary section 2. However, instead of the ball bearing, other types of bearings such as a slide bearing or a fluid bearing may be used.

The rotating section 3 in this embodiment has the shaft 31 and the rotor 32.

The shaft 31 is a columnar member extending along the central axis 9. As a material of the shaft 31, for example, stainless steel is used. The shaft 31 rotates around the central axis 9 while being supported by the lower bearing section 24 and the upper bearing section 25 described above. Further, a lower end portion 311 of the shaft 31 protrudes further to the lower side than the bottom plate portion 412 of the housing 21. An apparatus which is a drive target is connected to the lower end portion 311 of the shaft 31 through a power transmission mechanism such as a gear.

The rotor 32 is located radially inside the stator 22 and rotates along with the shaft 31. The rotor 32 has a plurality of magnets (not shown) arranged in the circumferential direction on the outer circumferential surface having a substantially cylindrical shape or on the inside. An N-polar magnetic pole face and an S-polar magnetic pole face are alternately arranged in the circumferential direction on the outer circumferential surface of the rotor 32. In addition, instead of the plurality of magnets, a single annular magnet in which an N-pole and an S-pole are alternately magnetized in the circumferential direction may be used.

If a drive current is supplied from the external power supply to the conducting wire 53 through the connector portion 233 and the bus bar 231, an electric current flows through the plurality of winding wire portions 61. If so, magnetic flux is generated in the teeth 512 serving as magnetic cores of the winding wire portions 61. Then, circumferential torque is generated by the action of the magnetic flux between the teeth 512 and the rotor 32. As a result, the rotating section 3 rotates around the central axis 9 with respect to the stationary section 2.

### <2-2. With regard to Conducting Wire Winding Method>

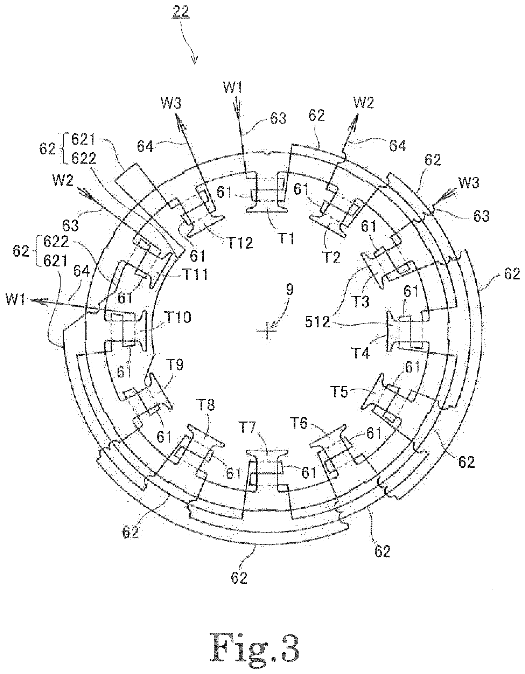

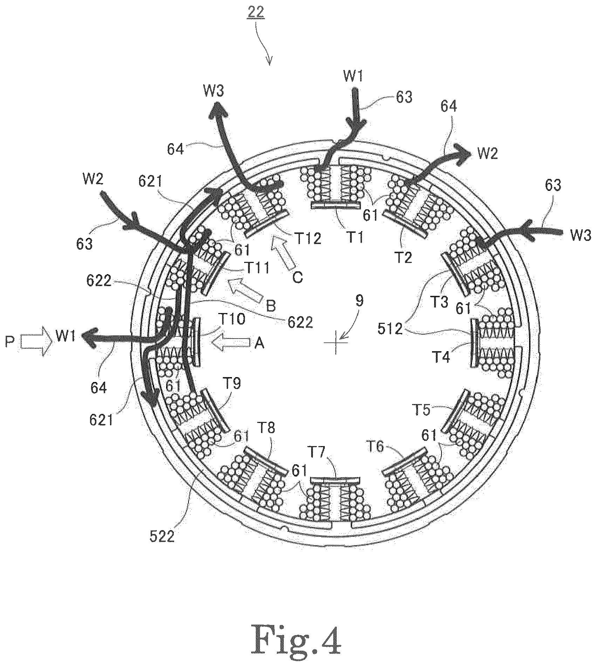

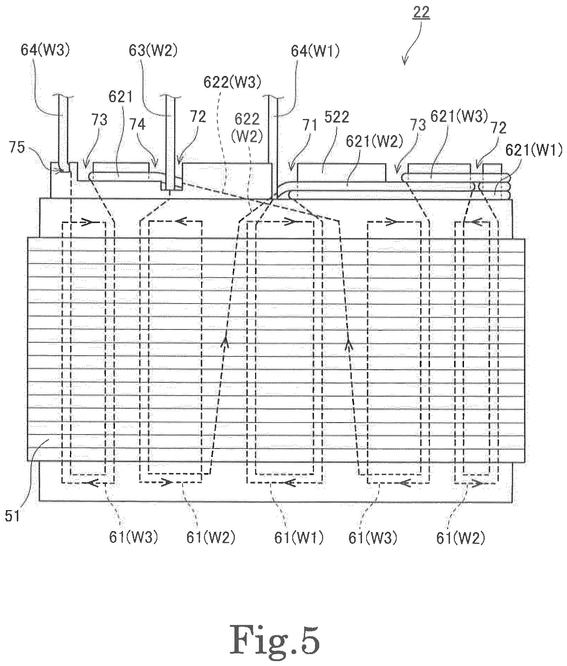

Subsequently, a method of winding the three conducting wires 53 around the insulator 52 will be described in detail. Figs. 3 and 4 are diagrams schematically showing a method of winding the three conducting wires 53. In order to avoid the drawings becoming complicated, in Fig. 3, illustration of the insulator 52 is omitted. Further, in Fig. 4, illustration of an outer connecting wire portion 621 (described later) is omitted except for a portion. Further, Fig. 5 is a diagram when the stator 22 is viewed from the position of an arrow P in Fig. 4.

The motor 1 according to this embodiment is a three-phase synchronous type motor which is driven by a three-phase alternating current, that is, first phase, second phase, and third phase alternating currents. The first phase, second phase, and third phase currents respectively flow through the three conducting wires 53. In the following, the conducting wire 53 through which the first phase current flows is referred to as a first conducting wire W1, the conducting wire 53 through which the second phase current flows is referred to as a second conducting wire W2, and the conducting wire 53 through which the third phase current flows is referred to as a third conducting wire W3. At the time of the manufacturing of the motor 1, the first conducting wire W1, the second conducting wire W2, and the third conducting wire W3 are wound around the insulator 52 in this order.

Further, as shown in Figs. 3 and 4, the stator 22 in this embodiment has twelve teeth 512. In the following, the tooth 512 around which the first conducting wire W1 is first wound is referred to as a first tooth T1. Then, other teeth 512 are referred to as a second tooth T2, a third tooth T3, ..., and a twelfth tooth T12 in a clockwise direction when viewed from the upper side in the axial direction.

As shown in Fig. 3, the first conducting wire W1 extends axially downward toward the first tooth T1 from above the first tooth T1 and is first wound around the first tooth T1. Next, the first conducting wire W1 extends from the first tooth T1 to the fourth tooth T4 in the circumferential direction and is wound around the fourth tooth T4. Subsequently, the first conducting wire W1 extends from the fourth tooth T4 to the seventh tooth T7 in the circumferential direction and is wound around the seventh tooth T7. Further, the first conducting wire W1 extends from the seventh tooth T7 to the tenth tooth T10 in the circumferential direction and is wound around the tenth tooth T10. Thereafter, the first conducting wire W1 is axially led out upward from the tenth tooth T10.

That is, the first conducting wire W1 has the four winding wire portions 61 which are formed around the first tooth T1, the fourth tooth T4, the seventh tooth T7, and the tenth tooth T10, three connecting wire portions 62 performing relay between the winding wire portions 61, the lead-out wire portion 63 of a winding start, and the lead-out wire portion 64 of a winding end.

All of the three connecting wire portions 62 of the first conducting wire W1 pass through the outside in the radial direction of the wall portion 522 of the insulator 52. That is, the three connecting wire portions 62 of the first conducting wire W1 are configured with only the outer connecting wire portion 621 which passes through the outside in the radial direction of the wall portion 522. The lead-out wire portion 63 of a winding start extends axially downward toward the winding wire portion 61 of the first tooth T1 which is first wound. The lead-out wire portion 64 of a winding end extends axially upward from the winding wire portion 61 of the tenth tooth T10 which is last wound.

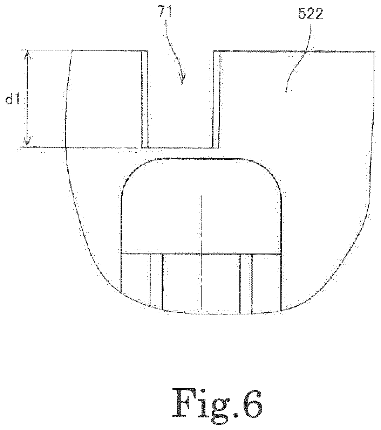

Fig. 6 is a diagram when the wall portion 522 of the insulator 52 is viewed from the position of an arrow A in Fig. 4. As shown in Fig. 6, the wall portion 522 has a first cutout 71 on the outside in the radial direction of the tenth tooth T10. Further, the wall portion 522 has the first cutouts 71 having the same depth on the outside in the radial direction of the first tooth T1, the fourth tooth T4, and the seventh tooth T7 as well. The first cutout 71 is recessed downward from an upper edge portion of the wall portion 522 and radially penetrates the wall portion 522. The first conducting wire W1 passes through the first cutouts 71 when heading from the outer connecting wire portion 621 to the winding wire portion 61 and when heading from the winding wire portion 61 to the outer connecting wire portion 621.

If the winding of the first conducting wire W1 is completed, subsequently, the winding of the second conducting wire W2 is performed. As shown in Fig. 3, the second conducting wire W2 extends axially downward toward the eleventh tooth T11 from above the eleventh tooth T11 and is first wound around the eleventh tooth T11. Next, the second conducting wire W2 extends from the eleventh tooth T11 to the eighth tooth T8 in the circumferential direction and is wound around the eighth tooth T8. Subsequently, the second conducting wire W2 extends from the eighth tooth T8 to the fifth tooth T5 in the circumferential direction and is wound around the fifth tooth T5. Further, the second conducting wire W2 extends from the fifth tooth T5 to the second tooth T2 in the circumferential direction and is wound around the second tooth T2. Thereafter, the second conducting wire W2 is axially led out upward from the second tooth T2.

That is, the second conducting wire W2 has the four winding wire portions 61 which are formed around the eleventh tooth T11, the eighth tooth T8, the fifth tooth T5, and the second tooth T2, the three connecting wire portions 62 performing relay between the winding wire portions 61, the lead-out wire portion 63 of a winding start, and the lead-out wire portion 64 of a winding end.

The connecting wire portion 62 connecting the eleventh tooth T11 and the eighth tooth T8 includes an inner connecting wire portion 622 which passes through the inside in the radial direction of the wall portion 522, and the outer connecting wire portion 621 which passes through the outside in the radial direction of the wall portion 522. The other two connecting wire portions 62 are configured with only the outer connecting wire portion 621 which passes through the outside in the radial direction of the wall portion 522. The lead-out wire portion 63 of a winding start extends axially downward toward the winding wire portion 61 of the eleventh tooth T11 which is first wound. The lead-out wire portion 64 of a winding end extends axially upward from the winding wire portion 61 of the second tooth T2 which is last wound.

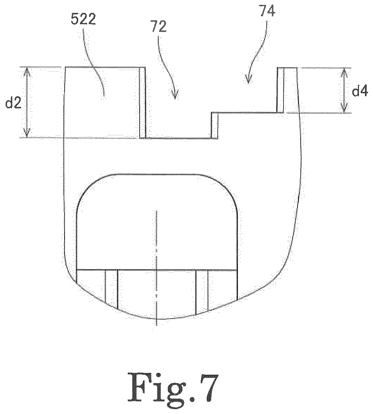

Fig. 7 is a diagram when the wall portion 522 of the insulator 52 is viewed from the position of an arrow B in Fig. 4. As shown in Fig. 7, the wall portion 522 has a second cutout 72 on the outside in the radial direction of the eleventh tooth T11. Further, the wall portion 522 has the second cutouts 72 having the same depth on the outside in the radial direction of the second tooth T2, the fifth tooth T5, and the eighth tooth T8 as well. The second cutout 72 is recessed downward from the upper edge portion of the wall portion 522 and radially penetrates the wall portion 522. The second conducting wire W2 passes through the second cutouts 72 when heading from the outer connecting wire portion 621 to the winding wire portion 61 and when heading from the winding wire portion 61 to the outer connecting wire portion 621.

If the winding of the second conducting wire W2 is completed, subsequently, the winding of the third conducting wire W3 is performed. As shown in Fig. 3, the third conducting wire W3 extends axially downward toward the third tooth T3 from above the third tooth T3 and is first wound around the third tooth T3. Next, the third conducting wire W3 extends from the third tooth T3 to the sixth tooth T6 in the circumferential direction and is wound around the sixth tooth T6. Subsequently, the third conducting wire W3 extends from the sixth tooth T6 to the ninth tooth T9 in the circumferential direction and is wound around the ninth tooth T9. Further, the third conducting wire W3 extends from the ninth tooth T9 to the twelfth tooth T12 in the circumferential direction and is wound around the twelfth tooth T12. Thereafter, the third conducting wire W3 is axially led out upward from the twelfth tooth T12.

That is, the third conducting wire W3 has the four winding wire portions 61 which are formed around the third tooth T3, the sixth tooth T6, the ninth tooth T9, and the twelfth tooth T12, the three connecting wire portions 62 performing relay between the winding wire portions 61, the lead-out wire portion 63 of a winding start, and the lead-out wire portion 64 of a winding end.

The connecting wire portion 62 connecting the ninth tooth T9 and the twelfth tooth T12 includes the inner connecting wire portion 622 which passes through the inside in the radial direction of the wall portion 522, and the outer connecting wire portion 621 which passes through the outside in the radial direction of the wall portion 522. The other two connecting wire portions 62 are configured with only the outer connecting wire portion 621 which passes through the outside in the radial direction of the wall portion 522. The lead-out wire portion 63 of a winding start extends axially downward toward the winding wire portion 61 of the third tooth T3 which is first wound. The lead-out wire portion 64 of a winding end extends axially upward from the winding wire portion 61 of the twelfth tooth T12 which is last wound.

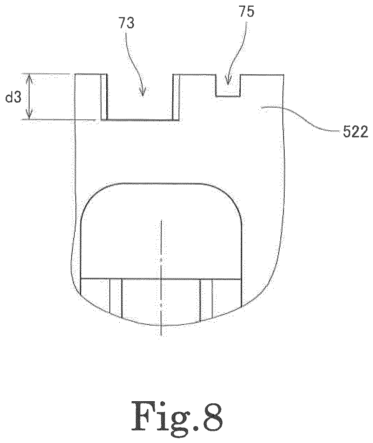

Fig. 8 is a diagram when the wall portion 522 of the insulator 52 is viewed from the position of an arrow C in Fig. 4. As shown in Fig. 8, the wall portion 522 has a third cutout 73 on the outside in the radial direction of the twelfth tooth T12. Further, the wall portion 522 has the third cutouts 73 having the same depth on the outside in the radial direction of the third tooth T3, the sixth tooth T6, and the ninth tooth T9 as well. The third cutout 73 is recessed downward from the upper edge portion of the wall portion 522 and radially penetrates the wall portion 522. The third conducting wire W3 passes through the third cutouts 73 when heading from the outer connecting wire portion 621 to the winding wire portion 61 and when heading from the winding wire portion 61 to the outer connecting wire portion 621.

As shown in Figs. 6 and 7, an axial depth d1 of the first cutout 71 is deeper than an axial depth d2 of the second cutout 72. Further, as shown in Figs. 7 and 8, the axial depth d2 of the second cutout 72 is deeper than an axial depth d3 of the third cutout 73. In this manner, each of the plurality of cutouts 71 to 73 in this embodiment has a depth corresponding to the phase of the winding wire portion 61 which is located radially on the inside thereof. That is, the axial depths of the cutouts 71 to 73 are different for each phase of the conducting wires 53 which pass through the cutouts 71 to 73.

In this way, it is possible to make the heights of the outer connecting wire portions 621 of the respective phases different from each other. Specifically, as shown in Fig. 5, the outer connecting wire portion 621 of the second conducting wire W2 is disposed on the upper side of the outer connecting wire portion 621 of the first conducting wire W1 and the outer connecting wire portion 621 of the third conducting wire W3 is disposed further on the upper side. Then, the outer connecting wire portions 621 of the respective phases can be prevented from overlapping in the radial direction. As a result, the radial dimension of the stator 22 can be reduced.

Further, in this embodiment, separately from the first cutout 71, the second cutout 72, and the third cutout 73 which are basic cutouts, an additional cutout 74 is provided in the wall portion 522 of the insulator 52. As shown in Fig. 7, the additional cutout 74 is provided next to the second cutout 72 which is located on the outside in the radial direction of the eleventh tooth T11. The second cutout 72 and the additional cutout 74 are connected to each other. An axial depth d4 of the additional cutout 74 is shallower than the axial depth d2 of the second cutout 72 adjacent thereto.

Further, the third conducting wire W3 passes through the additional cutout 74 when heading from the inner connecting wire portion 622 to the outer connecting wire portion 621. For this reason, the axial depth d4 of the additional cutout 74 is a depth corresponding to the third phase. That is, the axial depth d4 of the additional cutout 74 and the axial depth d3 of the third cutout 73 are made to be equal to each other. In this manner, by providing the additional cutout 74, it is possible to stabilize the positions and the heights of the inner connecting wire portion 622 and the outer connecting wire portion 621 of the third conducting wire W3.

As shown in Figs. 3 to 5, the inner connecting wire portion 622 of the second conducting wire W2 passes through the inside in the radial direction of the lead-out wire portion 64 of a winding end of the first conducting wire W1. In this way, the interference of the connecting wire portion 62 of the second conducting wire W2 with the lead-out wire portion 64 of the first conducting wire W1 further on the outside in the radial direction than the wall portion 522 can be avoided. That is, the connecting wire portion 62 of the second conducting wire W2 and the lead-out wire portion 64 of the first conducting wire W1 do not radially overlap each other further on the outside in the radial direction than the wall portion 522. In this manner, in the motor 1, the connecting wire portion 62 of the second conducting wire W2 is disposed while avoiding the lead-out wire portion 64 of the first conducting wire W1. In this way, the radially outward protrusion of a conducting wire is suppressed, and thus it is possible to reduce the radial dimension of the entirety of the motor 1.

In particular, as shown in Fig. 5, in this embodiment, the inner connecting wire portion 622 of the second conducting wire W2 comes into contact with the radially inner surface of the lead-out wire portion 64 of a winding end of the first conducting wire W1. In this manner, fluctuation of the position of the lead-out wire portion 64 of the first conducting wire W1 can be suppressed by pushing the lead-out wire portion 64 of the first conducting wire W1 by the inner connecting wire portion 622 of the second conducting wire W2. In this way, the radially inward protrusion of the first conducting wire W1 can be suppressed. In addition, the second conducting wire W2 passes through the first cutout 71 when heading from the inner connecting wire portion 622 to the outer connecting wire portion 621. In this way, the lead-out wire portion 64 of the first conducting wire W1 can be suppressed from protruding radially outward from the first cutout 71. Further, at the time of the manufacturing of the motor 1, the lead-out wire portion 64 of the first conducting wire W1 can be easily connected to the bus bar 231.

Further, as shown in Figs. 3 to 5, the inner connecting wire portion 622 of the third conducting wire W3 passes through the inside in the radial direction of the lead-out wire portion 64 of a winding end of the first conducting wire W1 and the lead-out wire portion 63 of a winding start of the second conducting wire W2. In this way, the connecting wire portion 62 of the third conducting wire W3 can avoid interfering with the lead-out wire portion 64 of the first conducting wire W1 and the lead-out wire portion 63 of the second conducting wire W2 further on the outside in the radial direction than the wall portion 522. That is, the connecting wire portion 62 of the third conducting wire W3 does not radially overlap with the lead-out wire portion 64 of the first conducting wire W1 and the lead-out wire portion 63 of the second conducting wire W2 further on the outside in the radial direction than the wall portion 522. In this manner, in the motor 1, the connecting wire portion 62 of the third conducting wire W3 is disposed while avoiding the lead-out wire portion 64 of the first conducting wire W1 and the lead-out wire portion 63 of the second conducting wire W2. In this way, the radially outward protrusion of a conducting wire is suppressed, and thus it is possible to reduce the radial dimension of the entirety of the motor 1.

Further, in this embodiment, the outer connecting wire portion 621 and the inner connecting wire portion 622 of the second conducting wire W2 are disposed between the winding wire portion 61 of the eleventh tooth T11 and the winding wire portion 61 of the eighth tooth T8. Further, the outer connecting wire portion 621 and the inner connecting wire portion 622 of the third conducting wire W3 are disposed between the winding wire portion 61 of the ninth tooth T9 and the winding wire portion 61 of the twelfth tooth T12. At these locations, the outer connecting wire portion 621 and the inner connecting wire portion 622 are continuous without intervention of the other winding wire portions 61. Then, the second conducting wire W2 and the third conducting wire W3 cross the wall portion 522 at the boundary between the outer connecting wire portion 621 and the inner connecting wire portion 622.

In this manner, if the outer connecting wire portion 621 and the inner connecting wire portion 622 are provided continuously, the radially inward protrusion of the inner connecting wire portion 622 can be suppressed. The reason is that the radial position of the outer connecting wire portion 621 is fixed by the wall portion 522, and therefore, the radially inward movement of the inner connecting wire portion 622 which is continuous with the outer connecting wire portion 621 is also restricted. In this way, the inner connecting wire portion 622 can be prevented from coming into contact with the rotor 32.

Further, as shown in Figs. 3 to 5, in this embodiment, the connecting wire portion 62 of the first conducting wire W1 is wound in the clockwise direction from the first tooth T1 to the tenth tooth T10 when viewed from the upper side in the axial direction. Further, the connecting wire portion 62 of the third conducting wire W3 is wound in the clockwise direction from the third tooth T3 to the twelfth tooth T12 when viewed from the upper side in the axial direction. Then, the respective winding wire portions 61 of the first conducting wire W1 and the third conducting wire W3 are wound in the counterclockwise direction when viewed from the inside in the radial direction. In contrast, the connecting wire portion 62 of the second conducting wire W2 is wound in the counterclockwise direction from the eleventh tooth T11 to the second tooth T2 when viewed from the upper side in the axial direction. Then, the respective winding wire portions 61 of the second conducting wire W2 are wound in the clockwise direction when viewed from the inside in the radial direction.

In this manner, in this embodiment, the connecting wire portions 62 of the first conducting wire W1 and the third conducting wire W3 and the connecting wire portion 62 of the second conducting wire W2 are disposed in directions opposite to each other in the circumferential direction. Further, the winding wire portions 61 of the first conducting wire W1 and the third conducting wire W3 and the winding wire portions 61 of the second conducting wire W2 are wound around the teeth insulating portions 521 in directions opposite to each other.

As in this embodiment, in a case where the inner connecting wire portion 622 of the second conducting wire W2 is disposed radially inside the lead-out wire portion 64 of the first conducting wire W1, if an attempt to wind the winding wire portion 61 of the eleventh tooth T11 of the second conducting wire W2 in the same direction as the winding wire portion 61 of the first conducting wire W1 is made, a nozzle of a winding machine interferes with the inner connecting wire portion 622 of the second conducting wire W2, and thus it becomes difficult to form the winding wire portion 61 of the eleventh tooth T11 which is connected to the inner connecting wire portion 622. If the second conducting wire W2 is wound in the opposite direction to the first conducting wire W1, after the winding wire portion 61 of the eleventh tooth T11 of the second conducting wire W2 is formed, the inner connecting wire portion 622 extends from the winding wire portion 61 of the eleventh tooth T11. Therefore, when forming the winding wire portion 61 of the eleventh tooth T11, the inner connecting wire portion 622 is not yet present, and therefore, it is easy to wind the second conducting wire W2.

Further, in this embodiment, a lower end portion of the lead-out wire portion 63 of a winding start of the second conducting wire W2 comes into contact with the radially outermost portion of the winding wire portion 61 of the eleventh tooth T11. In this way, the fluctuation of the position of the second conducting wire W2 is suppressed. Therefore, the radially outward protrusion of the second conducting wire W2 can be further suppressed. Further, the contact of the lead-out wire portion 63 of the second conducting wire W2 with the inner connecting wire portion 622 of the third conducting wire W3 can be suppressed. Further, at the time of the manufacturing of the motor 1, the lead-out wire portion 63 of the second conducting wire W2 can be easily connected to the bus bar 231.

Further, as shown in Fig. 8, the insulator 52 in this embodiment has a fixing groove 75, separately from the third cutout 73, on the outside in the radial direction of the twelfth tooth T12. The circumferential width of the fixing groove 75 is approximately the same as the diameter of the third conducting wire W3. The lead-out wire portion 64 of a winding end of the third conducting wire W3 which is last wound at the time of manufacturing is fitted into the fixing groove 75, thereby being fixed. Then, the third conducting wire W3 can be prevented from falling down radially inward at the time of manufacturing. In this way, the contact of the third conducting wire W3 with the rotor 32 can be prevented.

### <3. Modified Example>

The exemplary embodiments of the present invention have been described above. However, the present invention is not limited to the above-described embodiments.

In the embodiments described above, the inner connecting wire portions are provided in the second conducting wire and the third conducting wire among the three conducting wires. However, among the three conducting wires, the conducting wire having the inner connecting wire portion may be only one.

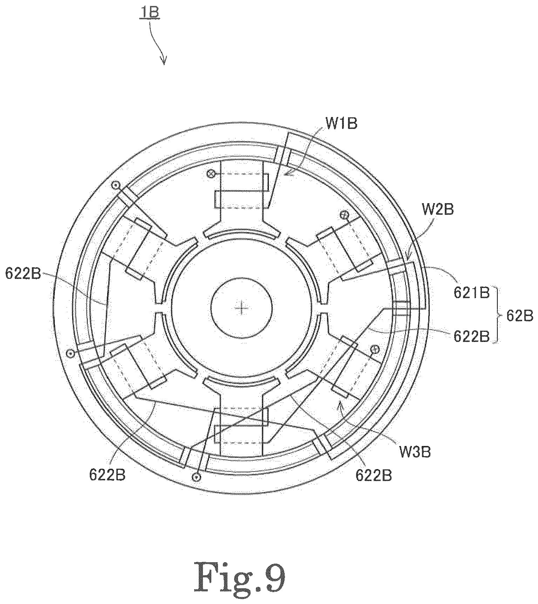

Fig. 9 is a diagram when a motor 1B according to an modified example is viewed from the upper side in the axial direction. In the example of Fig. 9, a connecting wire portion 62B of a first conducting wire W1B is configured to have an outer connecting wire portion 621B and an inner connecting wire portion 622B. That is, in the example of Fig. 9, the inner connecting wire portion 622B is provided in not only a second conducting wire W2B and a third conducting wire W3B, but also in the first conducting wire W1B. In this manner, if the inner connecting wire portions 622B are provided in all the conducting wires W1B, W2B, and W3B, the total lengths of the conducting wires W1B, W2B, and W3B can be shortened as a whole.

Further, if greater emphasis is placed on shortening the total length of the conducting wire, the inner connecting wire portion may be disposed at a circumferential position different from that of the lead-out wire portions of other conducting wires. The total length of the conducting wire can be further shortened by making the connecting wire portion pass through the inside in the radial direction of the wall portion at the position which does not originally interfere with the lead-out wire portion.

Further, the shape of a detail of each member may be different from the shape shown in each drawing of this application. Further, the respective elements which appear in the above-described embodiments or modified example may be appropriately combined to the extent that conflict does not occur.

### <4. The Others>

In addition, it is also possible to capture an invention from the above-described embodiments and modified example from a higher point of view or from a different point of view. The invention relates to, for example, a "motor which is an inner rotor type polyphase synchronous motor and has a plurality of conducting wires through which electric currents of the respective phases of a polyphase alternating current flow, wherein each of the plurality of conducting wires includes a plurality of winding wire portions which are arranged around a central axis extending up and down, a connecting wire portion which performs relay between the plurality of winding wire portions, and a lead-out wire portion extending axially upward from the winding wire portion, the connecting wire portion passes through an arc-shaped first route centered on the central axis in principle, but, a portion of the connecting wire portion of at least one conducting wire passes through a second route further on the inside in the radial direction than the first route, whereby interference of the connecting wire portion with the lead-out wire portions of other conducting wires is avoided". The "first route" is illustrated, in the above-described embodiments, as a route along the outer circumferential surface of the wall portion 522. Further, the "second route" is illustrated, in the above-described embodiments, as a route which passes through further on the inside in the radial direction than the wall portion 522. According to this invention, the interference of the connecting wire portion with the lead-out wire portions of other conducting wires on the first route can be avoided. In this way, it is possible to reduce the radial dimension of the motor.

### [Industrial Applicability]

The present invention can be applied to a motor.

## Claims

1. A motor comprising:
a stator (22, 22A); and
a rotor (32, 32A) which is rotatably supported on the inside in a radial direction of the stator (22, 22A),
wherein the stator (22, 22A) includes:
a stator core (51, 51A) which is a magnetic body,
an insulator (52, 52A) mounted on the stator core (51, 51A), and
first, second, and third conducting wires (W1, W2, W3, W1A, W2A, W3A) which are wound around the insulator (52, 52A) and through which electric currents of the respective phases of a three-phase alternating current flow,
wherein the stator core (51, 51A) includes:
a core back (511, 511A) which is seamlessly connected in an annular shape around a central axis (9, 9A), and
a plurality of teeth (512, 512A) extending radially inward from the core back (511, 511A),
wherein the insulator (52, 52A) includes:
a teeth insulating portion (521, 521A) which is interposed between each of the teeth (512, 512A) and the conducting wire (W1, W2, W3, W1A, W2A, W3A), and
a wall portion (522, 522A) extending in a circumferential direction further on the outside in radial direction and on the upper side than the teeth insulating portion (521, 521A),
wherein each of the first, second, and third conducting wires (W1, W2, W3, W1A, W2A, W3A) includes:
a plurality of winding wire portions (61, 61A) which are wound around the teeth insulating portion (521, 521A),
one or more connecting wire portions (62, 62A) connecting different winding wire portions (61, 61A) on different teeth (512, 512A) bypassing some teeth (512, 512A), and
a lead-out wire portion (63, 63A, 64) extending axially upward from the winding wire portion (61, 61A),
wherein the one or more connecting wire portions (62, 62A) of at least one conducting wire (W1, W2, W3, W1A, W2A, W3A) include:
outer connecting wire portions (621, 621A) passing the wall portion (522, 522A) outside in radial direction, and
inner connecting wire portions (622, 622A) passing the wall portion (522, 522A) inside in radial direction,
wherein the one or more connecting wire portions (62, 62A) of the first conducting wire (W1, W1A) have only outer connecting wire portions (621, 621A) passing the wall portion (522, 522A) outside in radial direction,
wherein the one or more connecting wire portions (62, 62A) of the second and third conducting wires (W2, W3, W2A, W3A) have outer connecting wire portions (621, 621A) passing the wall portion (522, 522A) outside in radial direction, and inner connecting wire portions (622, 622A) passing the wall portion (522, 522A) inside in radial direction,
**characterized in that**
the inner connecting wire portion (622, 622A) of the second conducting wire (W2, W2A) passes, in radial direction, inside the lead-out wire portion (63, 63A, 64) of the first conducting wire (W1, W1A), and
**in that** the inner connecting wire portion (622, 622A) of the third conducting wire (W3, W3A) passes, in radial direction, inside the lead-out wire portion (63, 63A, 64) of the first conducting wire (W1, W1A) and the lead-out wire portion (63, 63A, 64) of the second conducting wire (W2, W2A).

2. The motor according to Claim 1,
the outer connecting wire portion (621, 621A) and the inner connecting wire portion (622, 622A) are continuous, and
the at least one conducting wire (W1, W2, W3, W1A, W2A, W3A) crosses the wall portion (522, 522A).

3. The motor according to any one of Claims 1 to 2,
wherein the lead-out wire portion (63, 63A, 64) of the first conducting wire (W1, W1A) includes:
a lead-out wire portion (63, 63A, 64) of a winding start extending toward the winding wire portion (61, 61A) which is first wound, among the plurality of winding wire portions (61, 61A), and
a lead-out wire portion (63, 63A, 64) of a winding end extending from the winding wire portion (61, 61A) which is last wound, among the plurality of winding wire portions (61, 61A), and
the lead-out wire portion (63, 63A, 64) of a winding end of the first conducting wire (W1, W1A) and the inner connecting wire portion (622, 622A) of the second conducting wire (W2, W2A) are in contact with each other.

4. The motor according to any one of Claims 1 to 3,
wherein the conducting wire (W1, W2, W3, W1A, W2A, W3A) having the inner connecting wire portion (622, 622A) has a pair of winding wire portions (61, 61A) connected through only the inner connecting wire portion (622, 622A) and the outer connecting wire portion (621, 621A).

5. The motor according to any one of Claims 1 to4,
wherein the winding wire portions (61, 61A) of the first conducting wire (W1, W1A) and the winding wire portions (61, 61A) of the second conducting wire (W2, W2A) are wound around the teeth insulating portions (521, 521A) in directions opposite to each other, and
the connecting wire portions (62, 62A) of the first conducting wire (W1, W1A) and the connecting wire portions (62, 62A) of the second conducting wire (W2, W2A) are disposed in directions opposite to each other in the circumferential direction.

6. The motor according to Claim 5,
wherein the lead-out wire portion (63, 63A, 64) of the second conducting wire (W2, W2A) includes:
a lead-out wire portion (63, 63A, 64) of a winding start extending toward the winding wire portion (61, 61A) which is first wound, among the plurality of winding wire portions (61, 61A), and
a lead-out wire portion (63, 63A, 64) of a winding end extending from the winding wire portion (61, 61A) which is last wound, among the plurality of winding wire portions (61, 61A), and
the lead-out wire portion (63, 63A, 64) of a winding start of the second conducting wire (W2, W2A) is fixed by the winding wire portion (61, 61A) of the second conducting wire (W2, W2A).

7. The motor according to any one of Claims 1 to 6,
wherein the insulator (52, 52A) has a plurality of cutouts (71-74) recessed downward from an upper edge portion of the wall portion (522, 522A),
the conducting wire (W1, W2, W3, W1A, W2A, W3A) reaches the outer connecting wire portion (621, 621A) inside the cutout (71-74) from the winding wire portion (61, 61A), and
a depth of the cutout (71-74) is different for each phase of the conducting wire (W1, W2, W3, W1A, W2A, W3A) passing through the cutout (71-74).

8. The motor according to Claim 7,
wherein the plurality of cutouts (71-74) include:
a basic cutout (71-73) having a depth corresponding to a phase of the winding wire portion (61, 61A) which is located radially inside, and
an additional cutout (74) provided separately from the basic cutout (71-73),
the additional cutout (74) is connected to the basic cutout (71-73) and has a shallower axial depth than that of the basic cutout (71-73), and
wherein the conducting wire (W1, W2, W3, W1A, W2A, W3A) having the inner connecting wire portion (622, 622A) reaches the outer connecting wire portion (621, 621A) through the additional cutout (74) from the inner connecting wire portion (622, 622A).

9. The motor according to any one of Claims 1 to 8,
wherein a plurality of inner connecting wire portions (622, 622A) are present in the plurality of conducting wires (W1, W2, W3, W1A, W2A, W3A), and
some of the inner connecting wire portions (622, 622A) pass, in radial direction, inside the wall portion (522, 522A) at circumferential positions different from that of the lead-out wire portion (63, 63A, 64).

10. The motor according to any one of Claims 1 to 9,
wherein the insulator (52, 52A) further has a fixing groove (75) for fixing the lead-out wire portion (63, 63A, 64) of the conducting wire (W1, W2, W3, W1A, W2A, W3A) which is last wound at the time of manufacturing, among the plurality of conducting wires (W1, W2, W3, W1A, W2A, W3A).

## Patentansprüche

1. Ein Motor, der folgende Merkmale aufweist.
einen Stator (22, 22A); und
einen Rotor (32,32A), der an der Innenseite in einer Radialrichtung des Stators (22, 22A) drehbar getragen ist,
wobei der Stator (22, 22A) folgende Merkmale umfasst:
einen Statorkern (51, 51A), welcher ein Magnetkörper ist,
einen Isolator (52, 52A), der an dem Statorkern (51, 51A) befestigt ist, und
einen ersten, zweiten und dritten leitfähigen Draht (W1, W2, W3, W1A, W2A, W3A), die um den Isolator (52, 52A) gewickelt sind und durch die elektrische Ströme der jeweiligen Phasen eines Dreiphasenwechselstroms fließen,
wobei der Statorkern (51, 51A) folgende Merkmale umfasst:
eine Kernrückseite (511, 511A), die nahtlos in einer Ringform um eine Mittelachse (9, 9A) verbunden ist und
eine Mehrzahl von Zähnen (512, 512A), die sich von der Kernrückseite (511, 511A) radial nach innen erstrecken,
wobei der Isolator (52, 52A) folgende Merkmale umfasst:
einen Zahnisolierabschnitt (521, 521A), der zwischen jedem der Zähne (512, 512A) und dem leitfähigen Draht (W1, W2, W3, W1A, W2A, W3A) angeordnet ist und
einen Wandabschnitt (522, 522A), der sich in einer Umfangsrichtung auf der Außenseite in einer Radialrichtung und auf der oberen Seite weiter als der Zahnisolierabschnitt (521,521A) erstreckt,
wobei sowohl der erste, der zweite als auch der dritte leitfähige Draht (W1, W2, W3, W1A, W2A, W3A) folgende Merkmale umfasst:
eine Mehrzahl von Wickeldrahtabschnitten (61, 61A), die um den Zahnisolierabschnitt (521, 521A) gewickelt sind,
einen oder mehrere Verbindungsdrahtabschnitte (62, 62A), die durch Umgehen einiger Zähne (512, 512A) unterschiedliche Wickeldrahtabschnitte (61, 61A) auf unterschiedlichen Zähnen (512, 512A) verbinden und
einen Herausführungsdraht (63, 63A, 64), der sich von dem Wickeldrahtabschnitt (61, 61A) axial nach oben erstreckt,
wobei der eine oder die mehreren Verbindungsdrahtabschnitte (62, 62A) von zumindest einem leitfähigen Draht (W1, W2, W3, W1A, W2A, W3A) folgende Merkmale umfassen:
äußere Verbindungsdrahtabschnitte (621, 621A), die in einer Radialrichtung entlang dem Wandabschnitt (522, 522A) außerhalb verlaufen und
innere Verbindungsdrahtabschnitte (622, 622A), die in einer Radialrichtung entlang dem Wandabschnitt (522, 522A) innerhalb verlaufen,
wobei der eine oder die mehreren Verbindungsdrahtabschnitte (62, 62A) des ersten leitfähigen Drahts (W1, W1A) nur äußere Verbindungsdrahtabschnitte (621, 621A) aufweisen, die in einer Radialrichtung entlang dem Wandabschnitt (522, 522A) außerhalb verlaufen,
wobei der eine oder die mehreren Verbindungsdrahtabschnitte (62, 62A) des zweiten und dritten leitfähigen Drahts (W2, W3, W2A, W3A) äußere Verbindungsdrahtabschnitte (621, 621A) aufweisen, die in einer Radialrichtung entlang dem Wandabschnitt (522, 522A) außerhalb verlaufen und innere Verbindungsdrahtabschnitte (622, 622A), die in einer Radialrichtung entlang dem Wandabschnitt (522, 522A) innerhalb verlaufen,
**dadurch gekennzeichnet, dass**
der innere Verbindungsdrahtabschnitt (622, 622A) des zweiten leitfähigen Drahts (W2, W2A) in einer Radialrichtung innerhalb des Herausführungsdrahtabschnitts (63, 63A, 64) des ersten leitfähigen Drahts (W1, W1A) verläuft und dadurch, dass
der innere Verbindungsdrahtabschnitt (622, 622A) des dritten leitfähigen Drahts (W3, W3A) in einer Radialrichtung innerhalb des Herausführungsdrahtabschnitts (63, 63A, 64) des ersten leitfähigen Drahts (W1, W1A) und des Herausführungsdrahtabschnitts (63, 63A, 64) des zweiten leitfähigen Drahts (W2, W2A) verläuft.

2. Der Motor gemäß Anspruch 1,
bei dem der äußere Verbindungsdrahtabschnitt (621, 621A) und der innere Verbindungsdrahtabschnitt (622, 622A) fortlaufend sind und
der zumindest eine leitfähige Draht (W1, W2, W3, W1A, W2A, W3A) den Wandabschnitt (522, 522A) kreuzt.

3. Der Motor gemäß einem der Ansprüche 1 bis 2,
bei dem der Herausführungsdrahtabschnitt (63, 63A, 64) des ersten leitfähigen Drahts (W1, W1A) folgende Merkmale umfasst:
einen Herausführungsdrahtabschnitt (63, 63A, 64) eines Wickelbeginns, der sich zu dem Wickeldrahtabschnitt (61, 61A) erstreckt, der von der Mehrzahl von Wickeldrahtabschnitten (61, 61A) zuerst gewickelt wird, und
einen Herausführungsdrahtabschnitt (63, 63A, 64) eines Wickelendes, der sich von dem Wickeldrahtabschnitt (61, 61A) erstreckt, der von der Mehrzahl von Wickeldrahtabschnitten (61, 61A) zuletzt gewickelt wird, und
der Herausführungsdrahtabschnitt (63, 63A, 64) eines Wickelendes des ersten leitfähigen Drahts (W1, W1A) und der innere Verbindungsdrahtabschnitt (622, 622A) des zweiten leitfähigen Drahts (W2, W2A) in Kontakt miteinander sind.

4. Der Motor gemäß einem der Ansprüche 1 bis 3,
bei dem der leifähige Draht (W1, W2, W3, W1A, W2A, W3A), der den inneren Verbindungsdrahtabschnitt (622, 622A) aufweist, ein Paar von Wickeldrahtabschnitten (61, 61A) aufweist, die nur durch den inneren Verbindungsdrahtabschnitt (622, 622A) und den äußeren Verbindungsdrahtabschnitt (621, 621A) verbunden sind.

5. Der Motor gemäß einem der Ansprüche 1 bis 4,
bei dem die Wickeldrahtabschnitte (61, 61A) des ersten leitfähigen Drahts (W1, W1A) und die Wickeldrahtabschnitte (61, 61A) des zweiten leitfähigen Drahts (W2, W2A) um die Zahnisolierabschnitte (521, 521A) gewickelt sind und
die Verbindungsdrahtabschnitte (62, 62A) des ersten leitfähigen Drahts (W1, W1A) und die Verbindungsdrahtabschnitt (62, 62A) des zweiten leitfähigen Drahts (W2, W2A) in der Umfangsrichtung in zueinander entgegengesetzten Richtungen angeordnet sind.

6. Der Motor gemäß Anspruch 5,
bei dem der Herausführungsdrahtabschnitt (63, 63A, 64) des zweiten leitfähigen Drahts (W2, W2A) folgende Merkmale umfasst:
einen Herausführungsdrahtabschnitt (63, 63A, 64) eines Wickelbeginns, der sich zu dem Wickeldrahtabschnitt (61, 61A) erstreckt, der von der Mehrzahl von Wickeldrahtabschnitten (61, 61A) zuerst gewickelt wird und
einen Herausführungsdrahtabschnitt (63, 63A, 64) eines Wickelendes, der sich von dem Wickeldrahtabschnitt (61, 61A) erstreckt, der von der Mehrzahl von Wickeldrahtabschnitten (61, 61A) zuletzt gewickelt wird, und
der Herausführungsdrahtabschnitt (63, 63A, 64) eines Wickelbeginns des zweiten leitfähigen Drahts (W2, W2A) durch den Wickeldrahtabschnitt (61, 61A) des zweiten leitfähigen Drahts (W2, W2A) fixiert ist.

7. Der Motor gemäß einem der Ansprüche 1 bis 6,
bei dem der Isolator (52, 52A) eine Mehrzahl von Ausschnitten (71-74) aufweist, die von einem oberen Randabschnitt des Wandabschnitts (522, 522A) nach unten hin ausgenommen sind,
der leitfähige Draht (W1, W2, W3, W1A, W2A, W3A) den äußeren Verbindungsdrahtabschnitt (621, 621A) in dem Ausschnitt (71-74) von dem Wickeldrahtabschnitt (61, 61A) erreicht und
eine Tiefe des Ausschnitts (71-74) für jede Phase des leitfähigen Drahts (W1, W2, W3, W1A, W2A, W3A), der durch den Ausschnitt (71-74) verläuft, unterschiedlich ist.

8. Der Motor gemäß Anspruch 7,
bei dem die Mehrzahl von Ausschnitten (71-74) folgende Merkmale umfasst:
einen Grundausschnitt (71-73) mit einer Tiefe, die einer Phase des Wickeldrahtabschnitts (61, 61A) entspricht, der radial innerhalb angeordnet ist, und
einen zusätzlichen Ausschnitt (74), der getrennt von dem Grundausschnitt (71-73) vorgesehen ist,
der zusätzliche Ausschnitt (74) mit dem Grundausschnitt (71-73) verbunden ist und eine flachere axiale Tiefe aufweist als diejenige des Grundausschnitts (71-73) und
wobei der leitfähige Draht (W1, W2, W3, W1A, W2A, W3A), der den inneren Verbindungsdrahtabschnitt (622, 622A) aufweist, den äußeren Verbindungsdrahtabschnitt (621, 621A) durch den zusätzlichen Ausschnitt (74) von dem inneren Verbindungsdrahtabschnitt (622, 622A) erreicht.

9. Der Motor gemäß einem der Ansprüche 1 bis 8,
bei dem eine Mehrzahl von inneren Verbindungsdrahtabschnitten (622, 622A) in der Mehrzahl von leitfähigen Drähten (W1, W2, W3, W1A, W2A, W3A) vorliegt und
einige der inneren Verbindungsdrahtabschnitte (622, 622A) in einer Radialrichtung innerhalb des Randabschnitts (522, 522A) an Umfangspositionen verlaufen, die sich von denjenigen des Herausführungsdrahtabschnitts (63, 63A, 64) unterscheiden.

10. Der Motor gemäß einem der Ansprüche 1 bis 9,
bei dem der Isolator (52, 52A) ferner eine Fixierrille (75) aufweist zum Fixieren des Herausführungsdrahtabschnitts (63, 63A, 64) des leitfähigen Drahts (W1, W2, W3, W1A, W2A, W3A), der von der Mehrzahl von leitfähigen Drähten (W1, W2, W3, W1A, W2A, W3A) zum Zeitpunkt der Herstellung zuletzt gewickelt wird.

## Revendications

1. Moteur comprenant:
un stator (22, 22A); et
un rotor (32, 32A) qui est supporté de manière rotative à l'intérieur dans une direction radiale du stator (22, 22A),
dans lequel le stator (22, 22A) comporte:
un noyau de stator (51, 51A) qui est un corps magnétique,
un isolant (52, 52A) monté sur le noyau de stator (51, 51A), et
des premier, deuxième et troisième fils conducteurs (W1, W2, W3, W1A, W2A, W3A) qui sont enroulés autour de l'isolant (52, 52A) et à travers desquels circulent les courants électriques des phases respectives d'un courant alternatif triphasé,
dans lequel le noyau de stator (51, 51A) comporte:
un dos de noyau (511, 511A) qui est connecté sans transition et de forme annulaire autour d'un axe central (9, 9A), et
une pluralité de dents (512, 512A) s'étendant radialement vers l'intérieur depuis le dos de noyau (511, 511A),
dans lequel l'isolant (52, 52A) comporte:
une partie d'isolation des dents (521, 521A) qui est interposée entre chacune des dents (512, 512A) et le fil conducteur (W1, W2, W3, W1A, W2A, W3A), et
une partie de paroi (522, 522A) s'étendant dans une direction circonférentielle davantage à l'extérieur dans la direction radiale et du côté supérieur que la partie d'isolation des dents (521, 521A),
dans lequel chacun des premier, deuxième et troisième fils conducteurs (W1, W2, W3, W1A, W2A, W3A) comporte:
une pluralité de parties de fil d'enroulement (61, 61A) qui sont enroulées autour de la partie d'isolation des dents (521, 521A),
une ou plusieurs parties de fil de connexion (62, 62A) connectant différentes parties de fil d'enroulement (61, 61A) sur des dents différentes (512, 512A) en contournant certaines dents (512, 512A), et
une partie de fil de sortie (63, 63A, 64) s'étendant axialement vers le haut depuis la partie de fil d'enroulement (61, 61A),
dans lequel
les une ou plusieurs parties de fil de connexion (62, 62A) d'au moins un fil conducteur (W1, W2, W3, W1A, W2A, W3A) comportent:
des parties de fil de connexion extérieures (621, 621A) passant à travers la partie de paroi (522, 522A) vers l'extérieur dans la direction radiale, et
des parties de fil de connexion intérieures (622, 622A) passant à travers la partie de paroi (522, 522A) vers l'intérieur dans la direction radiale,
dans lequel les une ou plusieurs parties de fil de connexion (62, 62A) du premier fil conducteur (W1, W1A) ne présentent que des parties de fil de connexion extérieures (621, 621A) passant à travers la partie de paroi (522, 522A) vers l'extérieur dans la direction radiale,
dans lequel les une ou plusieurs parties de fil de connexion (62, 62A) des deuxième et troisième fils conducteurs (W2, W3, W2A, W3A) présentent des parties de fil de connexion extérieures (621, 621A) passant à travers la partie de paroi (522, 522A) vers l'intérieur dans la direction radiale, et des parties de fil de connexion intérieures (622, 622A) passant à travers la partie de paroi (522, 522A) vers l'intérieur dans la direction radiale,
**caractérisé par le fait que**
la partie de fil de connexion intérieure (622, 622A) du deuxième fil conducteur (W2, W2A) passe, dans la direction radiale, à l'intérieur de la partie de fil de sortie (63, 63A, 64) du premier fil conducteur (W1, W1A), et
**par le fait que**
la partie de fil de connexion intérieure (622, 622A) du troisième fil conducteur (W3, W3A) passe, dans la direction radiale, à l'intérieur de la partie de fil de sortie (63, 63A, 64) du premier fil conducteur (W1, W1A) et de la partie de fil de sortie (63, 63A, 64) du deuxième fil conducteur (W2, W2A).

2. Moteur selon la revendication 1,
la partie de fil de connexion extérieure (621, 621A) et la partie de fil de connexion intérieure (622, 622A) sont continues, et
l'au moins un fil conducteur (W1, W2, W3, W1A, W2A, W3A) passe à travers la partie de paroi (522, 522A).

3. Moteur selon l'une quelconque des revendications 1 à 2,
dans lequel la partie de fil de sortie (63, 63A, 64) du premier fil conducteur (W1, W1A) comporte:
une partie de fil de sortie (63, 63A, 64) d'un début d'enroulement s'étendant vers la partie de fil d'enroulement (61, 61A) qui est enroulée en premier lieu parmi la pluralité de parties de fil d'enroulement (61, 61A), et
une partie de fil de sortie (63, 63A, 64) d'une extrémité d'enroulement s'étendant depuis la partie de fil d'enroulement (61, 61A) qui est enroulée en dernier lieu parmi la pluralité de parties de fil d'enroulement (61, 61A), et
la partie de fil de sortie (63, 63A, 64) d'une extrémité d'enroulement du premier fil conducteur (W1, W1A) et la partie de fil de connexion intérieure (622, 622A) du deuxième fil conducteur (W2, W2A) sont en contact l'une avec l'autre.

4. Moteur selon l'une quelconque des revendications 1 à 3,
dans lequel le fil conducteur (W1, W2, W3, W1A, W2A, W3A) présentant la partie de fil de connexion intérieure (622, 622A) présente une paire de parties de fil d'enroulement (61, 61A) connectées uniquement par l'intermédiaire de la partie de fil de connexion intérieure (622, 622A) et la partie de fil de connexion extérieure (621, 621A).

5. Moteur selon l'une quelconque des revendications 1 à 4,
dans lequel les parties de fil d'enroulement (61, 61A) du premier fil conducteur (W1, W1A) et les parties de fil d'enroulement (61, 61A) du deuxième fil conducteur (W2, W2A) sont enroulées autour des parties d'isolation des dents (521, 521, 521A) dans des directions opposées l'une à l'autre, et
les parties de fil de connexion (62, 62A) du premier fil conducteur (W1, W1A) et les parties de fil de connexion (62, 62A) du deuxième fil conducteur (W2, W2A) sont disposées dans des directions opposées l'une à l'autre dans la direction circonférentielle.

6. Moteur selon la revendication 5,
dans lequel la partie de fil de sortie (63, 63A, 64) du deuxième fil conducteur (W2, W2A) comporte:
une partie de fil de sortie (63, 63A, 64) d'un début d'enroulement s'étendant vers la partie de fil d'enroulement (61, 61A) qui est enroulée en premier lieu parmi la pluralité de parties de fil d'enroulement (61, 61A), et
une partie de fil de sortie (63, 63A, 64) d'une extrémité d'enroulement s'étendant depuis la partie de fil d'enroulement (61, 61A) qui est enroulée en dernier lieu parmi la pluralité de parties de fil d'enroulement (61, 6 1A), et
la partie de fil de sortie (63, 63A, 64) d'un début d'enroulement du deuxième fil conducteur (W2, W2A) est fixée par la partie de fil d'enroulement (61, 61A) du deuxième fil conducteur (W2, W2A).

7. Moteur selon l'une quelconque des revendications 1 à 6,
dans lequel l'isolant (52, 52A) présente une pluralité de découpes (71 à 74) en retrait vers le bas depuis une partie de bord supérieure de la partie de paroi (522, 522A),
le fil conducteur (W1, W2, W3, W1A, W2A, W3A) atteint la partie de fil de connexion extérieure (621, 621A) à l'intérieur de la découpe (71 à 74) depuis la partie de fil d'enroulement (61, 61A), et
la profondeur de la découpe (71 à 74) est différente pour chaque phase du fil conducteur (W1, W2, W3, W1A, W2A, W3A) passant à travers la découpe (71 à 74).

8. Moteur selon la revendication 7,
dans lequel la pluralité de découpes (71 à 74) comporte:
une découpe de base (71 à 73) présentant une profondeur correspondant à une phase de la partie de fil d'enroulement (61, 61A) qui est située radialement à l'intérieur, et
une découpe additionnelle (74) prévue séparément de la découpe de base (71 à 73),
la découpe additionnelle (74) est connectée à la découpe de base (71 à 73) et présente une profondeur axiale inférieure à celle de la découpe de base (71 à 73), et
dans lequel le fil conducteur (W1, W2, W3, W1A, W2A, W3A) présentant la partie de fil de connexion intérieure (622, 622A) atteint la partie de fil de connexion extérieure (621, 621A) à travers la découpe additionnelle (74) depuis la partie de fil de connexion intérieure (622, 622A) .

9. Moteur selon l'une quelconque des revendications 1 à 8,
dans lequel une pluralité de parties de fil de connexion intérieures (622, 622A) sont présentes dans la pluralité de fils conducteurs (W1, W2, W3, W1A, W2A, W3A), et
certaines des parties de fil de connexion intérieures (622, 622A) passent, dans la direction radiale, à l'intérieur de la partie de paroi (522, 522A) à des positions circonférentielles différentes de celle de la partie de fil de sortie (63, 63A, 64).

10. Moteur selon l'une quelconque des revendications 1 à 9,
dans lequel l'isolant (52, 52A) présente par ailleurs une rainure de fixation (75) destinée à fixer la partie de fil de sortie (63, 63A, 64) du fil conducteur (W1, W2, W3, W1A, W2A, W3A) qui est enroulée en dernier lieu au moment de la fabrication, parmi la pluralité de fils conducteurs (W1, W2, W3, W1A, W2A, W3A).
